# EUROPEAN PATENT APPLICATION

(11) **EP 0 836 312 A2**
(43) Date of publication of application: **15.04.1998**
(21) Application number: 97306192.2
(22) Date of filing: 14.08.1997
(51) Int. Cl.: H04M 3/22, H04Q 3/00

(54) **Methods and apparatus for verifying network database query-response transactions**

(30) Priority: 17.08.1996 GB 9617329
(71) Applicant: Hewlett-Packard Company, Palo Alto, CA 94304 (US)
(72) Inventor: Kabay, Salih, Edinburgh EH4 3BB, Scotland (GB)
(74) Representative: Coker, David Graeme

(57) **Abstract**

Database query and response messages traversing signalling links in an SS7 signalling system, to enable local number portability (LNP) to be implemented, are passively monitored by a verification system. This verification system has its own copy of the LNP database, which it interrogates with information contained in a monitored query message. The system compares the results of this interrogation with the contents of the monitored response message corresponding to the query message. Any discrepancy indicates a potential problem with the LNP database.

## Description

### Technical Field

This invention relates to methods and apparatus for verifying network database query-response transactions, for example local number portability transactions in telecommunications systems.

### Background Art

The deregulation of telecommunications services in many jurisdictions, and the associated advent of competition in the provision of such services, have introduced a need to enable customers to change their telecommunications service provider at will. Such change is currently hindered by the association of a customer's telephone number with a particular service provider. Thus under the current system when a customer changes service provider their telephone number also changes. The associated inconvenience is perceived as constituting a deterrent to customers considering changing their service provider, and thus as reducing the effectiveness of competition between service providers.

In an effort to facilitate change of service provider by customers, it has been proposed to implement so-called local number portability (LNP). Under this arrangement, a customer would retain the same telephone number even if they changed service provider (i.e. the number would be 'portable' between service providers). Appropriate network database query-response equipment in the telecommunications system, based on the SS7 signalling network, would enable a call made to a customer's telephone number to be appropriately routed via the switching equipment of whichever service provider is currently providing service to that customer.

The deployment of LNP will require complex transaction and network routing capabilities in addition to those currently existing in the SS7 network. The proposed addressing method will require upgraded switches with the capability to launch a network database query and perform additional manipulation with the response to the query. An advanced intelligent network (AIN) based solution will require one or more network databases containing routing and rating information for LNP numbers and a signalling network infrastructure capable of routing database queries and responses and forwarding routing information.

The method of administering and transferring LNP customers between service providers will require new processes and procedures. The operations service and support (OSS) impacts of LNP must address some concerns, including:
- the practical implementation of real-time cut-over between service providers in response to subscriber decisions to change service provider;
- minimizing delay in receiving dial-tone and new calls;
- the potential for customer confusion;
- the retention of existing subscriber features.

The AIN architecture was originally conceived for rapid service introduction to selected customers within niche vertical markets. The long-term architecture for LNP now requires an AIN-based solution for the large-scale deployment of LNP service. The estimated customer take-up of LNP service is forecast to be 30-50% of POTS (plain old telephony service) subscribers within the metropolitan areas.

The selected LNP addressing method will require service providers and network operators to manage routing tables based in telephone switches and in SS7 service control points (SCPs), in order to deliver LNP to their subscribers. The scope for errors in LNP implementation and administration is significant, because routing information is shared between SS7 switching service point (SSP) and SCP elements. The routing tables within the SSPs will remain relatively static, but those in the LNP SCPs will be dynamically updated to track the transfer of customers between service providers. Any data error in either element could result in misrouted calls and unpredictable call handling.

The possible sources of erroneous data can span across organizational boundaries and require interaction between different functional entities, and include:
- human error during manual data entry;
- incorrect data;
- data corruption during procedures to update network elements;
- data corruption within individual network elements.

Standardized routing verification tests (message transfer part - MTP and signalling connection control protocol - SCCP) become less effective in auditing SS7 routing tables within an LNP environment and can only deliver partial measures of correctness. This is because these tests assume direct correlations between telephone numbers and specific switches, whereas LNP is specifically designed to avoid such correlation. In addition, these measures are intrusive and have the side effect of increased message load on the SS7 network. The number and types of anomaly that will occur in an LNP environment will be significantly increased and difficult to detect with existing monitoring tools. Much of the verification and auditing capabilities in use today are embedded in the SS7 switches and will require major enhancements to deal with LNP.

### Disclosure of Invention

According to one aspect of this invention there is provided a method for verifying network database query-response transactions, such as local number portability transactions, implemented with messages traversing a signalling system, comprising the steps of:
monitoring signalling system links for signalling messages which relate to network database query-response transactions; and
comparing information contained in network database response messages to information contained in a database different from the database used to generate the response messages, to verify accuracy of the information in the response messages.

### Brief Description of Drawings

A method and apparatus in accordance with this invention for verifying network database query-response transactions, consisting of local number portability transactions in a telecommunications system, will now be described, by way of example, with reference to the accompanying drawings, in which:
- Figure 1: shows an SS7 signalling system for implementing LNP and including provision for verifying the LNP transactions; and
- Figure 2: shows a verification system of Figure 1 in more detail.

### Best Mode for Carrying Out the Invention. & Industrial Applicability

The architecture for verifying LNP routing and other transactions according to this invention provides an independent method of verifying call/data routing through a network without inducing any additional overhead. Further, it provides a new approach to validating the integrity of synchronous and geographically distributed network databases.

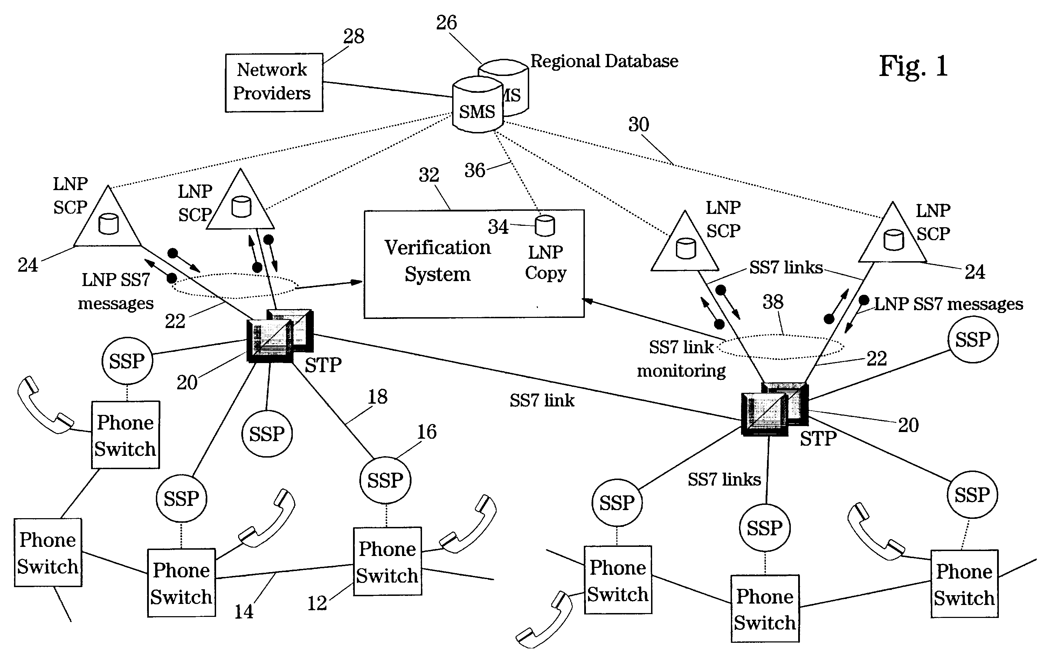

A network architecture to support an AIN-based LNP solution is depicted in Figure 1. Referring to Figure 1, the telephone system incorporates multiple telecommunications switches or exchanges 12 to which subscribers' equipment is coupled. These switches are interconnected by a transmission network 14 for carrying voice and data signals between subscribers. Each switch 12 also has an associated SS7 SSP 16, groups of which are connected by SS7 links 18 to an STP packet switch 20. The STPs 20 are interconnected, and each is also connected by further SS7 links 22 to LNP SCPs 24, which essentially comprise databases for providing information in response to queries routed from the SSPs 16 via the STPs 20.

Thus, for example, AT&T has proposed an LNP solution using a so-called Location Routing Number (LRN), which relies on switch-based triggers to reference service control functionality in the SCPs 24 in standard manner. This solution requires modification to the structure of SS7 Initial Address Messages (IAMs) as defined in the SS7 ISDN User Part (ISUP) protocol and used by an SSP to initiate set-up of a telephone call; this modification involves addition of a Generic Address Parameter (GAP) and a Forward Call Indicator (FCI). In the LRN solution a switch 12 receiving a sequence of dialled digits from a subscriber examiners those digits and performs an internal lookup to determine whether the dialled number (DN) is destined for a switch from which some subscribers have been transferred or ported to another service provider by means of LNP. If so, the calling subscriber's switch 12 performs an LNP SCP database lookup, by means of a TCAP (Transaction Capabilities Application Part) message sent via the associated SSP 16 and STP 20, to determine if the Called Party Number (CdPN) is in fact ported; as well as the CdPN, this TCAP message contains an Originating Transaction ID by which the switch 12 associates the database lookup transaction with the attempted call for which the lookup is required. The LNP SCP 24 responds with another TCAP message containing the same Originating Transaction ID and an LRN, which will be the same as the CdPN if that customer has not been ported. However, if the customer has been ported the LRN will be different from the CdPN. In this case the calling subscriber's switch 12 must select a route for the call in accordance with its LRN routing tables; the switch 12 then prepares and transmits an IAM with the following substitutions: CdPN=LRN (supplied by the LNP SCP), GAP=DN (as dialled by the subscriber), and FCI=LNP Query Done (i.e. the M-bit is set). When the IAM arrives at the switch 12 serving the ported customer, that switch checks the FCI and GAP. This check indicates that the IAM relates to a ported customer, so the switch 12 substitutes CdPN=GAP (to restore the called party number as actually dialled) and then uses this value to establish a physical connection to the ported customer's equipment.

It is expected that multiple LNP SCP databases will be deployed containing sufficient information to allow rating and routing of calls to LNP customers. The specific network topology and number of databases are dependent upon the particular network, the SCP transaction rate and the level of redundancy required.

An LNP service management system (SMS) 26 enables customer transfer and network database synchronization functions to be implemented, by providing an interface for service or network providers 28 to administer and update a master regional LNP database in the SMS 26. The individual LNP SCP databases owned and operated by various telecommunications carriers are then updated with new records of transferred customers (synchronized), via links 30 between the SMS 26 and the LNP SCPs 24.

The verification system 32 of the invention is connected to the regional SMS database using the same protocol as the LNP SCPs 24, and maintains its own copy 34 of the LNP database in synchronization, via a link 36, with the most recent network update of LNP data by the SMS 26 to the LNP SCPs 24. In addition the verification system 32 has probes 38 (comprising for example Hewlett-Packard E4251A card cages, E4254A interface processor cards and E4255/6/7A interfaces) coupled to the SS7 links 22 between the STPs 20 and the LNP SCPs 24, for passive monitoring of the messages passing over those links. By inspecting the contents of those messages, the verification system 32 monitors individual query-response transactions involving the LNP SCPs 24 and verifies that the information contained in the responses is consistent with the verification system's own copy 34 of the LNP database.

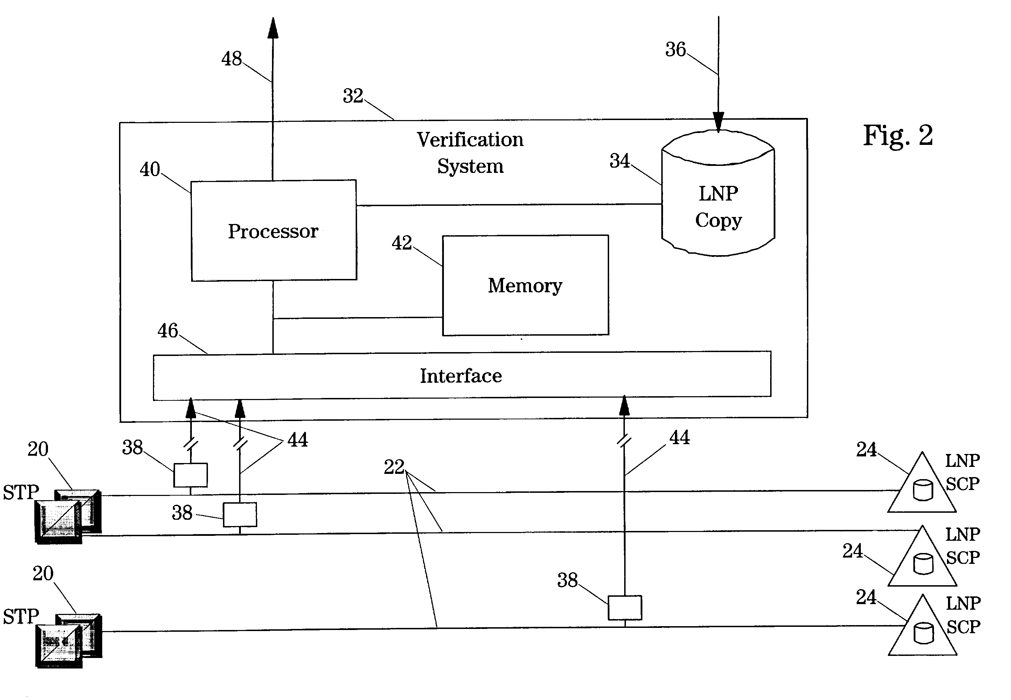

As shown in Figure 2, the verification system 32 contains a processor 40 for controlling and coordinating the operation of the verification system in accordance, for example, with program instructions stored in a memory 42. The system 32 receives monitored SS7 database query and response messages from the probes 38 via a communications network 44 (for example a LAN) coupled to the processor 40 and the memory 42 by a network interface 46. The processor 40 is coupled to the LNP copy database 34 to access the LNP data it contains, and also has a communications link 48 to the SMS 26.

The contents of SS7 messages monitored by the probes 38 are copied to the memory 42 where they are temporarily buffered. If the LNP SCPs 24 provide SCP functions in addition to LNP lookups, then the probes 38 may be operated to select only those SS7 messages relating to those lookups for copying to the memory 42. Likewise, it may not be necessary to copy the whole of each SS7 message to the memory 42, but instead copy only those fields contained in a message which are required for lookup verification (such as CdPN or LRN) and message identification (including message type and Originating Transaction ID).

The processor 40 then scans the SS7 messages buffered in the memory 42, using the Originating Transaction ID to associate query and response messages relating to the same attempted call. From the database query message the processor 40 obtains the CdPN to which the query related, and uses this to interrogate the LNP copy database 34 to obtain the corresponding LRN (if any). The processor 40 then compares the result of this interrogation with the LRN value in the actual response message as monitored by a probe 38. Any inconsistency revealed by this comparison is indicative of a problem which requires investigation.

Under very heavy loading, it may be desirable to sample transactions and derive statistical estimates of individual LNP database reliability/integrity.

The verification system according to this invention provides the following benefits:
- real-time verification of network database transactions, and resulting call routing;
- non-intrusive verification, without any additional SS7 load on the signalling network;
- real-time network-wide assessment of database integrity;
- pre-emptive indication of a faulty LNP SCP 24, helping to minimize the number of customer complaints and unresolved trouble reports.

The verification system traps inconsistencies in LNP responses as described above, and generates an alarm or report to supervisors at the SMS 26, via the communications link 48, so that any problems can be investigated. By monitoring LNP responses from multiple LNP SCP databases, inconsistencies distributed across a number of duplicated or partitioned SCPs 24 can be detected, thus enabling operators to minimize the number of misrouted calls. Also, where call setup must traverse several network operators before call completion, any disputes regarding handover between adjacent operators can be easily settled using audit data provided by the verification system.

## Claims

1. A method for verifying network database query-response transactions implemented with messages traversing a signalling system, comprising the steps of:
monitoring signalling system links for signalling messages which relate to network database query-response transactions; and
comparing information contained in network database response messages to information contained in a database different from the database used to generate the response messages, to verify accuracy of the information in the response messages.

2. The method of claim 1, wherein said different database is updated with information from a source which also updates the database used to generate the response messages.

3. The method of claim 1 or claim 2, wherein said transactions are local number portability transactions in a telecommunications network associated with the signalling system.

4. The method of any one of the preceding claims, wherein messages relating to different parts of a query-response transaction contain identifying data associating them with that transaction, data contained in a database query message is used to access information in said different database, and that information is compared with information in a database response message having the same identifying data as said database query message.
